## Europäisches Patentamt

## European Patent Office

## Office européen des brevets

(11) Veröffentlichungsnummer: **0 213 493**
**A1**

(12) # EUROPÄISCHE PATENTANMELDUNG

(21) Anmeldenummer: 86111209.2

(22) Anmeldetag: 13.08.86

(51) Int. Cl.⁴: **G 01 B 3/00**

(30) Priorität: 05.09.85 CH 3826/85

(43) Veröffentlichungstag der Anmeldung:
11.03.87 Patentblatt 87/11

(84) Benannte Vertragsstaaten:
CH DE FR GB IT LI

(71) Anmelder: **BAGREAL AG**
**Birgistrasse 7**
**CH-8304 Wallisellen(CH)**

(72) Erfinder: **Armbruster, Eberhard**
**Caspar-Wueststrasse 66**
**CH-8052 Zürich(CH)**

(72) Erfinder: **Soriano, Antonio**
**Guyerstrasse 9**
**CH-8304 Wallisellen(CH)**

(74) Vertreter: **EGLI-EUROPEAN PATENT ATTORNEYS**
**Horneggstrasse 4**
**CH-8008 Zürich(CH)**

(54) **Einstell- und Festhaltevorrichtung für einen Träger auf einem Schlitten.**

(57) Die Vorrichtung umfasst zwei einander parallele, mit je einem Schlitten zusammenwirkende Führungsschienen. Der erste Schlitten (3) ist auf der ersten Führungsschiene (1) stets frei gleitend angeordnet. Der zweite Schlitten (7) ist auf der zweiten Führungsschiene (6) angeordnet und wahlweise gleitend oder lösbar festgehalten. Der Träger (4) samt seinem Wirkteil (5) ist am ersten Schlitten (3) befestigt. Zwischen den Schlitten ist ein Verbindungsmittel (9) angeordnet, das in Gleitrichtung steif und kraftschlüssig, senkrecht zur Gleitrichtung jedoch elastisch ist und ein längliches, insbesondere plättchen-, quader- oder stabförmiges Verbindungselement sein kann. Dieses kann mindestens mit dem zweiten Schlitten (7) lösbar verbunden sein, vorzugsweise mittels einer von Schraube oder Feder belasteten Klemmverbindung (8). Ein Endteil (10) des Verbindungselements (9) und die zweite Führungsschiene (6) können ebene Führungsflächen (11) aufweisen, die bei belasteter Klemmverbindung aneinander und parallel zur Gleitrichtung liegen. Die Verbindungslinie zwischen dem Wirkteil (5) und der Führungsfläche (11) des Verbindungselements (9) steht in einem Winkel von weniger als 0,1 radian zur Gleitrichtung. Bei einer bevorzugten Verwendung ist der Wirkteil (5) eine Messfläche in einer Vorrichtung zur Einstellung einer Messlänge.

Fig.1

EP 0 213 493 A1

Einstell- und Festhaltevorrichtung
für einen Träger auf einem Schlitten

Die Erfindung betrifft eine Einstell- und Festhaltevorrichtung für einen auf einer Führungsschiene verschiebbaren oder lösbar festgehaltenen Träger eines Wirkteils, insbesondere für den Träger einer Messfläche oder eines Tasters in einer Vorrichtung zur Einstellung einer Messlänge beziehungsweise zur Abtastung einer Position, wobei der Träger an einem auf der Führungsschiene bewegbaren Schlitten befestigt ist.

Es ist bekannt, zur Einstellung des Trägers eines Wirkteils eine Vorrichtung zu verwenden, die eine Führungsschiene und einen darauf gleitenden Schlitten umfasst. Beispielsweise ist zur Einstellung von Messlängen der eine Wirkteil eine Messfläche auf einem ersten Messteil, der an der Führungsschiene befestigt ist. Die andere Messfläche liegt auf einem zweiten Messteil, der am Schlitten befestigt ist. Die Einstellung der Messlänge erfolgt durch Verstellen des Schlittens auf der Führungsschiene und anschliessendes Festhalten des Schlittens gegenüber der Führungsschiene in der gewünschten Stellung. Das einfachste Beispiel einer nach diesem Prinzip konstruierten Vorrichtung ist die wohlbekannte Schublehre.

Zur hochpräzisen Einstellung des Trägers wird die Position des Schlittens gegenüber der Führungsschiene in Gleitrichtung beispielsweise mit einer optischen Messeinrichtung festgestellt oder bestimmt, insbesondere mittels eines an sich bekannten Systems mit einem eine Skala aufweisendem Längenmassstab und einem entsprechenden Abtastkopf. Es wird angestrebt, mit solchen Mitteln eine Präzision von wenigen bis einem Micrometer für die Einstellung des Wirkteils des Trägers zu erreichen. Eine solche Präzision wird zwar von der optischen Ablesung erreicht, nicht jedoch von der auf den bekannten Vorrichtungen eingestellten Position des Wirkteils des Trägers.

Die bekannten Vorrichtungen der erwähnten Art haben nämlich den Nachteil, dass das Festhalten des Schlittens in seiner Position auf der Führungsschiene die Vorrichtung deformiert und die Lage des Trägers verändert. Bei gegebener Lage des Schlittens auf der Führungsschiene liegt der am Schlitten angeordnete Träger nicht in einer und derselben Lage, wenn der Schlitten auf der Führungsschiene festgehalten wird oder wenn er darauf frei gleiten kann. Der Wirkteil des Trägers kann aber bei frei gleitendem Schlitten nicht mechanisch abgetastet oder sonstwie mechanisch verwendet werden. Als Folge davon ist die eingestellte Position des Wirkteils und daher beispielsweise die eingestellte Messlänge nur dann richtig, wenn sie nicht abgetastet werden kann, das heisst, mechanisch ist die eingestellte Position nicht ohne Verlust an Präzision verwendbar.

Aufgabe der Erfindung ist es, eine Vorrichtung zu schaffen, bei welcher die eingestellte Position des Trägers ohne oder zumindest mit vernachlässigbar geringem Verlust an Präzision beim Festhalten des Schlittens auf der Führungsschiene mechanisch verwendbar, beispielsweise mechanisch abtastbar ist.

Die Erfindung geht aus von der Erkenntnis, dass die Führungsschiene gegenüber dem Schlitten eine doppelte Funktion ausübt. Zum einen dient die Führungsschiene zur Führung des Schlittens beim Gleiten, mit dem Zweck, den Träger einzustellen. Zum anderen dient die Führungsschiene zur Befestigung des Schlittens, mit dem Zweck, gegen die bei der mechanischen Verwendung des Wirkteils des Trägers darauf ausgeübten Kräfte eine Reaktionskraft zu erzeugen. Aus dieser Erkenntnis folgt, dass diese Funktionen voneinander zu trennen sind, wenn die Beeinträchtigung der bei der Führung erreichten Präzision durch die Wirkung der bei der Befestigung erzeugten Kräfte vermieden werden soll.

Die genannte Aufgabe wird gelöst durch eine Vorrichtung der eingangs erwähnten Art, welche gekennzeichnet ist durch die im Anspruch 1 angegebene Kombination von Merkmalen. Vorteilhafte Weiterbildungen der Vorrichtung sowie eine die erfindungsgemässe Vorrichtung verwendende weitere Vorrichtung ergeben sich aus den abhängigen Ansprüchen.

Dadurch, dass das Verbindungsmittel die Schlitten in Gleitrichtung steif miteinander verbindet, wird erreicht, dass die bei der mechanischen Verwendung des Wirkteils des Trägers darauf ausgeübte Reaktionskraft voll auf den zweiten Schlitten und somit auf die zweite Führungsschiene übertragen wird, ohne den ersten Schlitten zu belasten, d.h. zu deformieren oder zu verstellen. Dadurch hingegen, dass das Verbindungsmittel die Schlitten senkrecht zur Gleitrichtung elastisch miteinander verbindet, wird erreicht, dass die beim Festhalten (z.B. Klemmen mittels Schraube oder Feder) des zweiten Schlittens auftretenden, auf den zweiten Schlitten senkrecht zur Gleitrichtung wirkenden Kräfte keine Deformation oder Verstellung des ersten Schlittens bewirken. Beim Vorgang des Klemmens erzeugte Torsionskräfte verbiegen das Verbindungsmittel, statt den ersten Schlitten zu verdrehen.

Die gewünschte Kombination von Steifheit des Verbindungsmittels in seiner Längsrichtung und von Elastizität in seiner Querrichtung wird vorteilhafterweise durch eine Ausbildung des Verbindungsmittels als längliches Plättchen, als Quader oder als Stab von geeigneten Dimensionen im Längs- und Querschnitt erreicht. Dabei werden Torsionskräfte noch vermindert, wenn gemäss einer vorteilhaften Ausbildung eines derartigen Verbindungselements ein Endteil desselben eine Führungsfläche aufweist, die sich auf eine entsprechende Führungsfläche der Führungsschiene abstützt, wobei diese Führungsflächen parallel zur Gleitrichtung, d.h. zu den Führungsschienen liegen: das Klemmen des Verbindungselements auf den zweiten Schlitten hält dann das Verbindungselement in einer optimalen Lage im Raum, bei welcher keine Torsionskräfte vom Klemmen selbst verursacht werden. Ganz sicher wird das Entstehen von Torsionskräften beim Klemmen vermieden, wenn die Führungsflächen annhähernd durch die Mitte des Wirkteils des Trägers verlaufen. Dies ist aus pratischen Gründen wegen des Raumbedarfs zur Verwendung des Wirkteils des Trägers, beispielsweise zur Einführung des Messguts, nur selten erreichbar, es genügt aber in der Praxis, wenn die Verbindungslinie zwischen der Mitte des Wirkteils und der Mitte der Führungsfläche des Verbindungselements in einem Winkel zur Gleitrichtung steht, der weniger als 0,1 radian beträgt, wenn also die Linie, welche die Mitten der Mess- und Führungsflächen verbindet, in einem Winkel zur Gleitrichtung steht, dessen Tangens kleiner ist als 0,1.

Nachstehend wird die Erfindung unter Bezugnahme auf die Zeichnung im einzelnen beschrieben, wobei die dargestellte Ausbildung bloss als Veranschaulichung und in keiner Weise als Einschränkung der Erfindung zu verstehen ist. In allen Figuren werden für gleiche Teile gleiche Bezugszeichen verwendet. Es zeigen:

Fig. 1     einen schematischen Grundriss der erfindungsgemässen Einstell- und Festhaltevorrichtung,

Fig. 2     einen schematischen Aufriss der erfindungsgemässen Vorrichtung der Fig. 1 im Schnitt nach der Linie A-A der Fig. 1, und

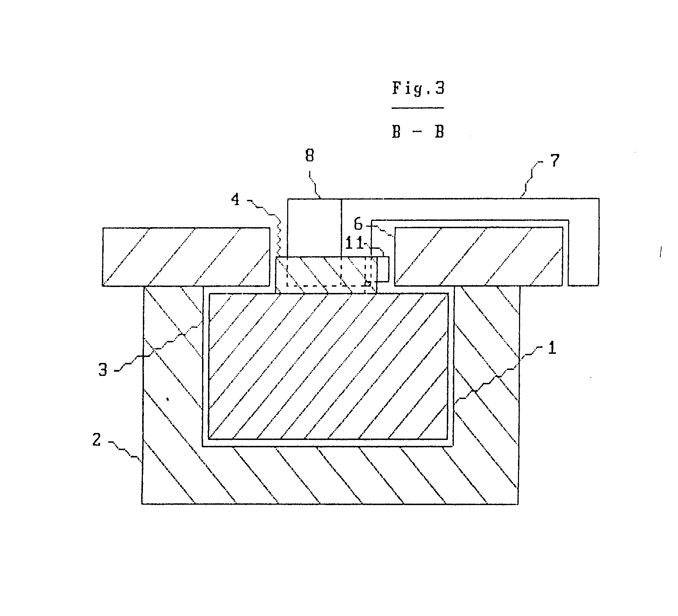

Fig. 3     einen schematischen Seitenriss der erfindungsgemässen Vorrichtung der Fig. 1 im Schnitt nach der Linie B-B der Fig. 1.

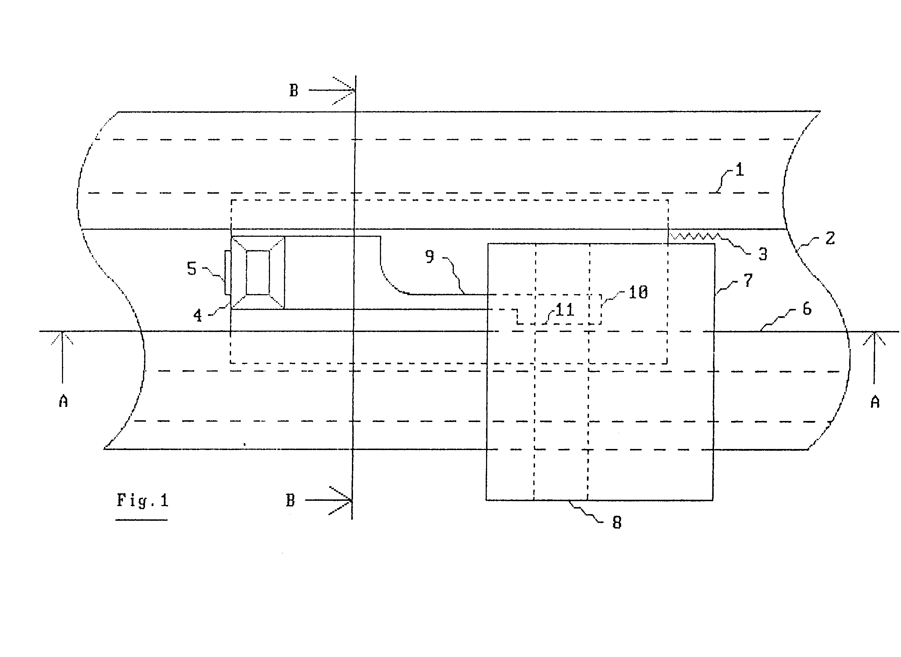

In Fig. 1 ist eine Einstell- und Festhaltevorrichtung im Grundriss schematisch dargestellt. Im vorliegenden Beispiel ist diese Einstell- und Festhaltevorrichtung im Zusammenhang mit einer Vorrichtung zur Einstellung einer Messlänge zwischen zwei Messflächen dargestellt, sie kann jedoch im Zusammenhang mit einer beliebigen anderen Vorrichtung betrachtet werden, beispielsweise im Zusammenhang mit einer Vorrichtung zum Einstellen eines Tasters zur Abtastung einer Position eines Teils.

Die Einstell- und Festhaltevorrichtung umfasst eine erste Führungsschiene 1, die im vorliegenden Beispiel als Führungswanne mit eine Führungsboden und zwei Führungsflanken innerhalb eines Sockels 2 ausgebildet ist, jedoch eine beliebige andere übliche Form aufweisen kann, zum Beispiel die aus optischen Versuchseinrichtungen bekannte dreieckige Form. Auf dieser ersten Führungsschiene ist ein erster Schlitten 3 so angeordnet, dass er stets frei gleiten kann.

Am ersten Schlitten 3 ist der Träger 4 eines Wirkteils 5 befestigt. Dieser Wirkteil 5 ist im vorliegenden Beispiel als die eine Messfläche der Vorrichtung zur Einstellung einer Messlänge ausgebildet, wobei die andere, nicht dargestellte Messfläche auf bekannte Weise über einen entsprechenden, auch nicht dargestellten Träger an dem die Führungsschiene 1 tragenden Sockel 2 befestigt ist und beide Messflächen parallel liegen.

Die Einstell- und Festhaltevorrichtung umfasst eine zweite Führungsschiene 6, die mit einem zweiten Schlitten 7 zusammenwirkt. Dieser zweite Schlitten 7 ist auf der zweiten Führungsschiene 6 wahlweise gleitend oder lösbar festgehalten. Dies wird mittels einer an sich bekannten und daher nur schematisch dargestellten lösbaren Klemmvorrichtung 8 zum Klemmen des zweiten Schlittens 7 auf die zweite Führungsschiene 6 erreicht. Beispielsweise handelt es sich um eine U-förmige Klemmvorrichtung mit einer oder zwei Feststellschrauben, oder um eine federbelastete Klemmvorrichtung mit einem Profil und einem darin eingesetzten L-förmigen Glied, das mittels Fingerdruck gegen die Feder entlastbar ist.

Zwischen dem ersten Schlitten 3 und dem zweiten Schlitten 7 ist ein Verbindungsmittel 9 angeordnet. Im vorliegenden Beispiel, bei einer Vorrichtung zur Einstellung einer Messlänge im Bereich von wenigen mm bis etwa 1 m mit einer Präzision im Bereich von wenigen bis 1 um, ist das Verbindungsmittel 9 als plättchenförmiges Verbindungselement ausgebildet, dessen Länge in der Grössenordnung von 100 mm liegt und dessen Querschnitt Dimensionen in der Grössenordnung von 2 x 10 mm aufweist. Das Verbindungselement 9 könnte aber auch als runder Stab oder als Quader mit Dimensionen in der gleichen Grössenordnung ausgebildet sein.

Bei dieser Ausbildung des Verbindungsmittels 9 wird eine Kraft, die in Längsrichtung wirkt, voll vom einen Schlitten auf den anderen übertragen, d.h. die Verbindung der Schlitten durch das Verbindungselement 9 ist in Längsrichtung weitgehend steif und kraftschlüssig. Es handelt sich dabei im wesentlichen um diejenige Kraft in der Grössenordnung bis zu 1 N, die zur Überwindung der Reibung des ersten Schlittens 3 auf der ersten Führungsschiene 1 dient, wenn dieser mit Hilfe des zweiten Schlittens 7 positioniert wird, und um die viel kleinere Kraft, die anlässlich der Verwendung des Wirkteils 5 zum Beispiel von der Feder einer Messuhr auf die Messfläche ausgeübt wird. Senkrecht zur Gleitrichtung ist hingegen die Verbindung der Schlitten durch das Verbindungselement soweit elastisch, dass keine senkrecht zur Gleitrichtung wirkende Kräfte vom zweiten Schlitten 7 auf den ersten Schlitten 3 übertragen werden (solche Kräfte entstehen beispielsweise beim Klemmen des Verbindungselements 9 auf den zweiten Schlitten 7).

Als Folge davon kann die Lage des ersten Schlittens 3 gemäss folgendem Vorgehen eingestellt werden: zunächst wird die Klemmverbindung gelöst, dann wird der erste Schlitten 3 mit Hilfe einer an sich bekannten, nicht dargestellten Vorrichtung (beispielsweise durch einen von einer Gewindestange mit passender Untersetzung angetriebenen Stössel) in die gewünschte Richtung bis zur gewünschten Lage gestossen, anschliessend wird der zweite Schlitten 7 von Hand in die zur Erstellung der Klemmverbindung passende Lage nachgestossen, und schliesslich wird die Klemmverbindung erstellt. Es ist ersichtlich, dass mit diesem Einstellvorgang der erste Schlitten 3 leicht und schnell in die gewünschte Lage gebracht werden kann, und dass die Vornahme der Befestigung dieses Schlittens in bezug auf den Sockel 2 den Schlitten nicht verstellt, weil die beim Klemmen entstehenden Verstellkräfte auf den Schlitten nicht übertragen werden.

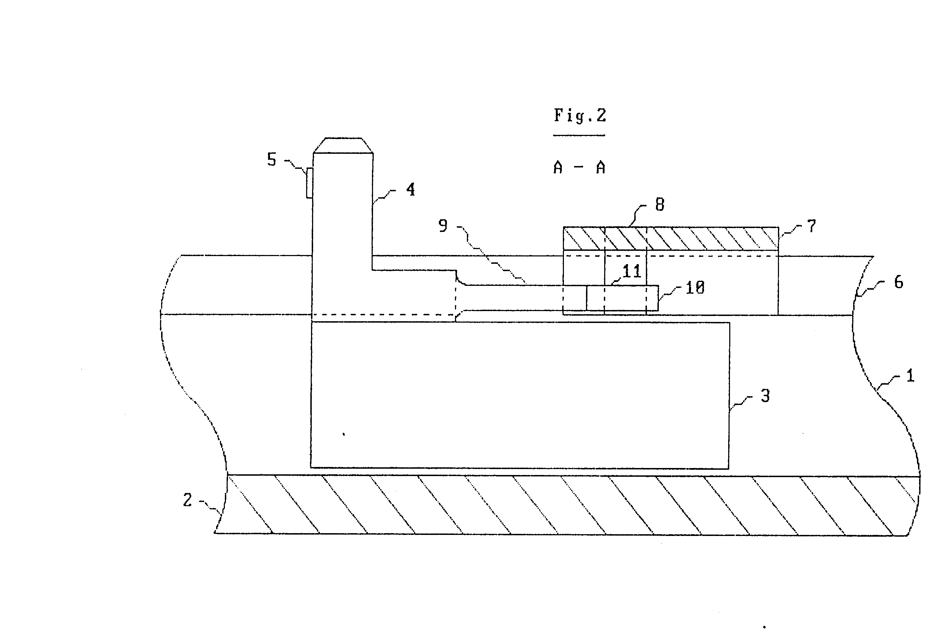

Noch sicherer ist allerdings, die Verstellkräfte am ihrem Entstehen zu hindern. Zu diesem Zweck ist ein Endteil 10 des Verbindungselements 9 mit einer ebenen Führungsfläche 11 versehen, die parallel zur Gleitrichtung und im vorliegenden Beispiel parallel zur Zeichnungsebene der Fig. 2 liegt. Die Führungsschiene 6 weist ebenfalls eine ebene Führungsfläche auf, die der Führungsfläche 11 insofern entspricht, als deren Ebene bei belasteter Klemmvorrichtung (also beim Klemmen) mit der Ebene der Führungsfläche 11 zusammenfällt. Das Klemmen drückt also die beiden Führungsflächen aneinander. Wenn die Klemmverbindung gelöst ist, sind die beiden Führungsflächen jedoch nicht voneinander entfernt, sie können aneinander vorbeigleiten. Daraus folgt, dass der Klemmvorgang keine Bewegung und keine nennenswerte Deformation des Verbindungselements 9 bewirkt, so dass auch keine nennenswerten Kräfte entstehen, die den Schlitten 3 verstellen könnten.

Natürlich ist es von Vorteil, wenn die bei der Verwendung des Wirkteils 5 auf diesen ausgeübte Kraft (im vorliegenden Beispiel die von der Feder einer Messuhr auf die Messfläche ausgeübte Kraft) in Längsrichtung des Verbindungselements 9 ausgeübt wird. Optimal wäre es, wenn der Wirkteil 5 (im vorliegenden Beispiel die Messfläche) in der Verlängerung des Verbindungselements 9 liegen könnte. In der Praxis ist dies jedoch kaum möglich, weil dann kein Platz für die Verwendung (im vorliegenden Beispiel für die Placierung des Messguts) übrigbleit. Der Wirkteil 5 (im vorliegenden Beispiel die Messfläche) kommt meist höher zu liegen als in der Verlängerung des Verbindungselements 9 und ist meist auch seitlich gegenüber dem Verbindungselement 9 etwas versetzt, wie aus Fig. 1 und 2 ersichtlich ist. Es ist jedoch im Hinblick auf die gewünschte Präzision der Positionierung des Wirkteils 5 akzeptabel, einen Winkel zwischen der Gleitrichtung und der Verbindungslinie zwischen dem Wirkteil (etwa der Mitte des Wirkteils, im vorliegenden Beispiel etwa der Mitte der Messfläche) und der geklemmten Führungsfläche (etwa der Mitte der Führungsfläche 11 des Verbindungselements 9) entstehen zu lassen, wenn dieser Winkel weniger als 0,1 radian beträgt.

Im vorangehenden wurde eine bevorzugte Verwendung der erfindungsgemässen Einstell- und Festhaltevorrichtung in einer Vorrichtung zur Einstellung einer Messlänge zwischen einer Messfläche eines feststehenden Messteils und einer Messfläche eines gegenüber dem feststehenden Messteil wahlweise verschiebbaren oder lösbar festgehaltenen Messteils beschrieben. Bei dieser bevorzugten Verwendung dient der Träger mit dem Wirkteil als wahlweise verschiebbarer oder lösbar festgehaltener Messteil mit einer Messfläche. Damit werden jedoch andere Verwendungsarten der erfindungsgemässen Einstell- und Festhaltevorrichtung nicht ausgeschlossen.

Patentansprüche

1.  Einstell- und Festhaltevorrichtung für einen auf einer Führungsschiene verschiebbaren oder lösbar festgehaltenen Träger (4) eines Wirkteils (5), insbesondere für den Träger einer Messfläche oder eines Tasters in einer Vorrichtung zur Einstellung einer Messlänge beziehungsweise zur Abtastung einer Position, wobei der Träger (4) an einem auf der Führungsschiene (1) bewegbaren Schlitten (3) befestigt ist, dadurch gekennzeichnet, dass

- die Einstell- und Festhaltevorrichtung zwei einander parallele, mit je einem Schlitten zusammenwirkende Führungsschienen umfasst,

- der erste Schlitten (3) auf der ersten Führungsschiene (1) stets frei gleitend angeordnet ist, während der zweite Schlitten (7) auf der zweiten Führungsschiene (6) wahlweise gleitend oder lösbar festgehalten angeordnet ist,

- der Träger (4) am ersten Schlitten befestigt ist, und

- zwischen den beiden Schlitten ein Verbindungsmittel (9) angeordnet ist, das die beiden Schlitten in Gleitrichtung steif und kraftschlüssig, senkrecht zur Gleitrichtung jedoch elastisch verbindet.

2.  Vorrichtung nach Anspruch 1, dadurch gekennzeichnet. dass das Verbindungsmittel ein längliches, insbesondere plättchen-, quader- oder stabförmiges Verbindungselement ist.

3.  Vorrichtung nach Anspruch 1, dadurch gekennzeichnet, dass das Verbindungsmittel mindestens mit dem zweiten Schlitten lösbar verbunden ist.

0213493

4. Vorrichtung nach Anspruch 3, dadurch gekennzeichnet, dass die lösbare Verbindung eine von Schraube oder Feder belastete Klemmverbindung (8) ist.

5. Vorrichtung nach Anspruch 2 und 4, dadurch gekennzeichnet, dass ein Endteil (10) des Verbindungselements (9) und die Führungsschiene (6) einander entsprechende ebene Führungsflächen (11) aufweisen, welche bei belasteter Klemmverbindung (8) aufeinanderliegen und aneinander angedrückt sind, wobei die bei belasteter Klemmverbindung gemeinsame Ebene dieser Führungsflächen parallel zur Gleitrichtung liegt.

6. Vorrichtung nach Anspruch 5 mit einem am Träger (4) feststehend angeordneten Wirkteil (5), dadurch gekennzeichnet, dass die Verbindungslinie zwischen der Mitte des Wirkteils (5) und der Mitte der Führungsfläche (11) des Verbindungselements (9) in einem Winkel zur Gleitrichtung steht, der weniger als 0,1 radian beträgt.

7. Vorrichtung zur Einstellung einer Messlänge zwischen einer Messfläche eines feststehenden Messteils und einer Messfläche eines gegenüber dem feststehenden Messteil wahlweise verschiebbaren oder lösbar festgehaltenen Messteils, mit einer Einstell- und Festhaltevorrichtung gemäss Anspruch 1, bei welcher der Träger (4) ein Messteil und der Wirkteil (5) eine Messfläche der Vorrichtung zur Einstellung einer Messlänge ist.

Fig.1

B

A

1

2

3

5

4

9

10

11

7

6

8

B

A

Fig.2

A - A

5 4 8 9 7 6 11 10 1 3 2

Fig.3

B — B

| | EINSCHLÄGIGE DOKUMENTE | | EP 86111209.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| X | FR - A1 - 2 536 530 (ETABLISSEMENTS H.B.) <br> * Gesamt, insbesondere Fig. 2, 3 * <br> -- | 1-4 | G 01 B   3/00 | |
| X | CH - A5 - 645 459 (TESA) <br> * Gesamt * <br> -- | 1-4 | | |
| A | DE - A1 - 3 227 142 (SCHNEIDER & KERN) <br> * Gesamt * <br> -- | 1 | | |
| A | US - A - 2 801 472 (DAVIDIAK) <br> * Gesamt * <br> ---- | 1 | | |
| | | | RECHERCHIERTE SACHGEBIETE (Int Cl 4) | |
| | | | G 01 B   3/00 <br> G 01 B   5/00 <br> G 01 B  21/00 <br> B 25 H   1/00 <br> B 25 H   7/00 | |

Der vorliegende Recherchenbericht wurde für alle Patentansprüche erstellt.

| Recherchenort | Abschlußdatum der Recherche | Prüfer |
|---|---|---|
| WIEN | 13-11-1986 | TOMASELLI |